# EUROPEAN PATENT APPLICATION

(11) **EP 2 688 057 A1**
(43) Date of publication of application: **22.01.2014**
(21) Application number: 12823590.0
(22) Date of filing: 15.03.2012
(51) Int. Cl.: G09F 21/04

(54) **INTERACTIVE AND MULTIFUNCTIONAL INFORMATION UNIT HAVING AUTONOMOUS MOVEMENT**

(30) Priority: 15.03.2011 ES 201100296 P
(71) Applicant: Goad Company, S.L., 33201 Gijón (Asturias) (ES)
(72) Inventor: LOPEZ PONTON, Roberto, E-33594 Posada de Llanes Llanes (Asturias) (ES)
(74) Representative: Garcia-Cabrerizo y del Santo, Pedro Maria
(86) International application number: PCT/ES2012/000061
(87) International publication number: WO 2013/024182

(57) **Abstract**

The invention relates to an interactive and multifunctional information unit having autonomous movement that includes a housing (2) having wheels (3) that are driven by gear motors (4) and rechargeable batteries (5) and are actuated by an electronic controller (10). The unit has a computer (6) having a connection to the Internet (7) via Wi-Fi or 3G mobile telephony, and operational movement control is carried out by radio control, a programmed autonomous system and/or distance or long-distance control via Internet. The unit optionally incorporates volumetric and distance sensors (13), a video camera (14), a plug (15) for connection to a grid at a recharging station located in the surrounding area, solar panels (16), LED technology panels (17), a projector device (18), slots (19) for brochures, mechanisms (20) that dispense products, samples or the like, an interphone (21), a defibrillator (22) and a first-aid kit (23) and/or a suction apparatus (24).

## Description

### OBJECT OF THE INVENTION

As the title of this descriptive specification states, the present invention relates to an interactive and multifunctional information unit having autonomous movement, the innovative characteristics of which have notable advantages, which will be described in detail further on and which represent an important novelty in its field of application over the current prior art.

The object of the invention, in particular, centers on a device which is configured as a unit equipped with autonomous means of movement actuated by remote, robotic or radio control, allowing its free movement through a determined area. Its purpose is to serve as an interactive element in public or private spaces with a large number of people in order to offer, through different audio visual media and means, information of all types, preferably advertising or promotional information as well as in order to supply complementary services which may be related both to entity promoting the information being disclosed as well as to the entity who owns or manages the area in which the unit moves.

### FIELD OF APPLICATION OF THE INVENTION

The field of application of the present invention falls within the technical sector of the industry dedicated to the manufacture of equipment and devices for autonomous movement as well as the technical sector of the industry dedicated to the manufacture of informative and advertising media.

### BACKGROUND OF THE INVENTION

As is known, at present the use of informative and/or advertising media, which in addition to or instead of fixed images, use images animated by means of moving lights, emitting messages regarding office hours, directions or recommendations, is widely disclosed since the moving image has a substantially greater power of attraction than the fixed image or writing, thus allowing the attention of the target group to be captured more efficiently.

In addition, the conventional means for disclosing information and/or publicity usually consist of screens or panels arranged in fixed location, or sometimes, on transportable equipment, however, they also have to be installed in a static manner at a specific site. They will, thus, only capture the attention of the public approaching them or passing close-by.

In order to take advantage of this situation and fill a gap in the market in this respect, the applicant itself is the proprietor of the patent of invention no. ES2156793, which discloses a radio-controlled video advertising mobile module, the objective of which is to develop a means so that companies or entities who acquire it, may move it through a propitious area such as a mall, a venue with corporate, sports or cultural events, or even in public space, with the aim of bringing closer to the user, that is to say to the public in general, the information which they wish to impart by means of a moving image, just as well as a video image, virtual reality or cartoons which are always accompanied by sounds incorporated into a medium capable of moving independently by being radio-controlled.

Said module, although it satisfactorily achieves its set objective, has certain aspects which can be improved upon in order to provide additional advantages to those it already has. This is the essential object of the present invention, which develops a new device based on said module to whose characteristics, utilities and applications, others are also added or modified, notably expanding its utility and practicality.

In this context, the previous module is converted into the interactive and multifunctional information unit having autonomous movement proposed here, improving, with respect to the latter, aspects both in relation its autonomous mobility and functionality as well as the means of information and advertising distribution which it includes. It also includes new complementary elements, which allows it to carry out additional functions, thereby converting it into more than a mere advertising medium which moves around an area.

It must also be mentioned that the applicant does not know of the existence of any other interactive and multifunctional information unit having autonomous movement or application for an invention of the like which has the technical, structural or similar constituent characteristics which the invention defined here has.

### EXPLANATION OF THE INVENTION

The interactive and multifunctional information unit having autonomous movement proposed by the present invention is thus designed as a great novelty within its field of application since on the basis of its implementation and in a restricted manner, the previously indicated objectives are achieved, the characterizing details distinguishing it being suitably reflected in the claims at the end which accompany this descriptive specification.

As has been previously indicated, the invention is specifically proposing an interactive and multifunctional information unit having autonomous movement, which, in a known manner, is formed from a housing equipped with means in the interior allowing autonomous movement, allowing random or targeted movement in order to attract attention and, if for any reason it is necessary, to move to a determined point.

In order to carry out this movement, the invention includes, preferably in its interior part, rolling means, actuation means, formed by motors as well as means of storing the required energy, that is to say, batteries. Reproduction systems are mounted in its interior, which may be videos and/or a computer and visualization means on its exterior configured as monitors or screens which may be touch-sensitive in order to browse different informative menus, all of which is expediently attached to the housing mentioned. The housing may also include static printed elements of an informative or promotional nature and it is equipped with a door to access its interior.

Thus, proceeding from said configuration, the defined unit also has the distinctive feature of having the following additional characteristics:
- as informative elements:
   - one or a plurality of LED technology panels, with static, blinking or changing info-promotional messages;
   - a projector device suitable for projecting images, videos or messages on walls, roofs or floors of the site in which the unit moves;
   - one or a plurality of housings suitable for containing brochures, catalogues or other printed elements with graphical information such that they are freely accessible to the public;
   - and one or a plurality of mechanisms, actuated by coins, tokens or free of charge, which dispense products, samples or other objects associated with the company or entity managing the unit or associated with site in which the unit is situated;
- as interactive elements:
   - an interphone enabling interested members of the public to get in contact with an information center, the company or the entity managing the unit or the site in which it is situated;
   - a connection to the internet (via Wi-Fi or mobile telephony) for contacting the company or entity managing the unit or the site in which the unit is situated by means of a touch screen and via a website and/or email;
      - as additional service elements for the company or the entity managing the site in which it is located:
   - defibrillator and a first-aid kit, an element which is compulsory in large complexes;
   - a vacuum in the lower part of the unit, which cleans the surface of the area through which the unit passes while it is moving.
In addition to the above, and for the most, optionally, the defined unit envisages the existence of a recharging station in the area in which it moves, to which it goes in a programmed manner in the event that it detects a significant drop in its batteries; it remains connected to the grid therein until it is recharged.

Alternatively, the incorporation of solar panels is envisaged, which connected to the batteries, provide the energy supply required for said recharging.

Lastly, it should be pointed out that the unit according to the invention, in order to move, has four motorized wheels, two of which having respective electronic gear motors which by means of an electronic controller and respective chain and pinion mechanisms, drive the other two wheels of the same side and provision is made for the operational control to be carried out by means of radio control, by an autonomous system with a programmed route, in this case it has volumetric and distance sensors and/or by means of distance or long-distance control via Internet (Wi-Fi) or mobile telephony (3G), in which case a video camera is incorporated which allows a visual of the area to be provided from the point of control.

Furthermore, the unit may be also incorporate an incident detector and the possibility to solve these incidents remotely from the center, as well as a visual recognition scanning system in order that, by means of corresponding software, the device is automatically directed to the location where it detects groups of people so that it has greater visual impact.

In light of the above, it is clear that the interactive and multifunctional information unit having autonomous movement described represents an innovative design with structural and constituent characteristics hitherto unknown for that purpose. These are the reasons, along with its practical utility, which provide it with sufficient basis for obtaining the privilege of exclusivity being applied for.

### DESCRIPTION OF THE DRAWINGS

As a complement to the description being developed for the gateway, which is the object of the invention and in order to help with greater understanding of the characteristics which distinguish the invention, the present descriptive specification is accompanied by a set of plans, forming an integral part of the specification, in which the following is presented in an illustrative and non-limiting manner:

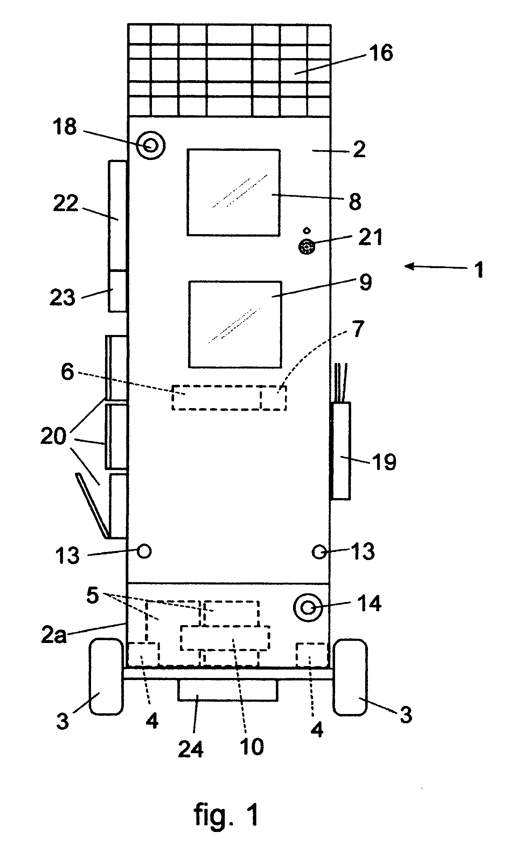

Figure 1: shows a schematic view of a front elevation of an exemplary embodiment of the interactive and multifunctional information unit having autonomous movement, which is the object of the invention. The main parts comprising both external and internal may be seen, since the internal parts are represented by means of dashed lines.

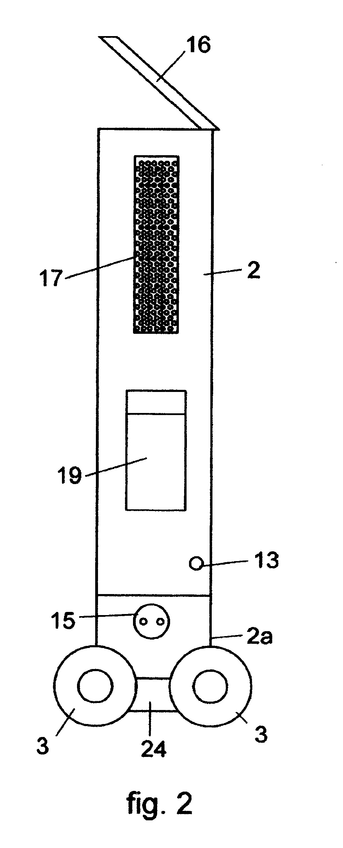

Figure 2: shows a view of the lateral elevation of the exemplary information unit according to the invention shown in the previous figure.

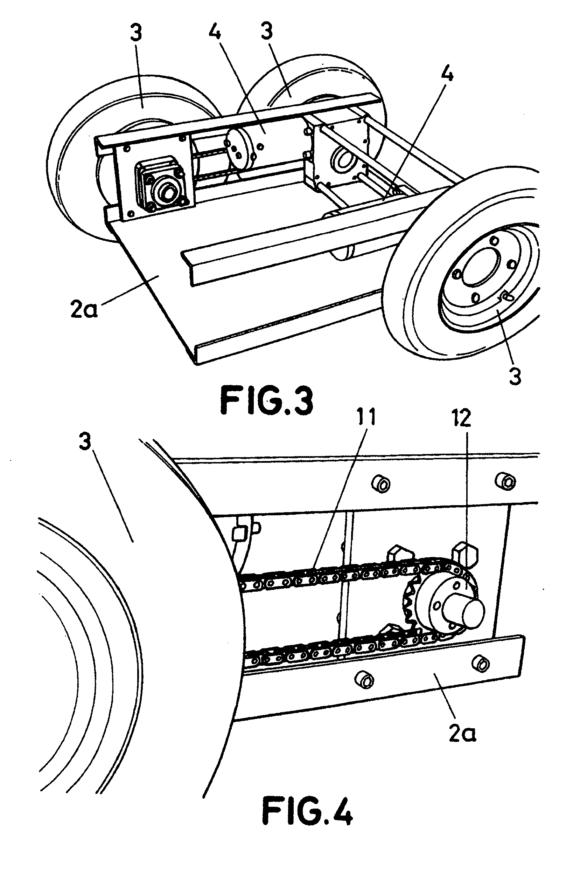

Figures 3 and 4: respectively show details of the lower base in which the wheels are incorporated. The coupling of the motors to the wheels and their connection to those which are not motorized by means of chain and pinion mechanism may be seen in these figures.

### PREFERRED EMBODIMENT OF THE INVENTION

In view of the figures mentioned and in accordance with the numeration adopted, a preferred exemplary embodiment of the invention may be seen, comprising the parts and elements which will be described below.

Thus, as may be observed in said figures, the unit (1) in question is formed from a housing (2) which, in its lower part, preferably incorporates wheels (3) that are driven by gear motors (4) powered by batteries (5) which are rechargeable and, housed in its interior, it has at least one computer (6), capable of, at least, reproducing video images and sounds and is equipped with a connection to the internet, via Wi-Fi or 3G mobile telephony, which is connected to one or a plurality of monitors (8) and/or to, at least one touch screen (9), expediently coupled to the said housing (2) so as to be externally accessible.

In a preferred embodiment, the unit has four wheels (3) fixed to its lower base (2a), two of which are motorized by means of respective gear motors (4) coupled thereto and which, by means of an electronic controller (10) which actuates them and respective chain (11) and pinion (12) mechanisms which connect them to the other two, provides the unit with the required mobility to move through the area it determines.

In turn, the operational control of said movement of the unit is carried out by radio control, by means of remote control (not shown), or by means of an autonomous system with a programmed route, through the incorporation of corresponding software into the computer (6) integrated into the housing (2), in which case volumetric and distance sensors (13) are incorporated therein, and/or by means of distance or long-distance control via the Internet, a video camera (14) being incorporated in this case which allows images of the area to be obtained from the remote control point.

The invention, in order to carry out the said recharging of the batteries (5), envisages the existence of a recharging station (not shown) situated in the area of the site in which the unit (1) moves, to which the unit goes in a programmed manner to connect to the electrical supply grid and recharge the batteries (5), a plug (15) suitable for this purpose being provided for said connection to the grid.

Complementarily or alternatively, it is also envisaged for solar panels (16) to be incorporated, being expediently provided in the upper part of the housing (2), connected to the batteries (5) and providing the required energy supply for said recharging.

Moreover, the unit (1) optionally has one or a plurality of LED technology panels (17) with static, blinking or changing info-promotional messages; a projector device (18) suitable for projecting images, videos or messages on walls, roofs or floors of the site in which the unit moves; one or a plurality of housings (19) for containing brochures or similar elements accessible to the public; and/or one or a plurality of mechanisms (20) that dispense products, samples or other objects.

The unit, similarly in an optional manner, is capable of incorporating an interphone (21) connected to an information center, a defibrillator (22) and a first-aid kit (23), expediently housed in a suitable compartment, and/or a suction apparatus (24) situated on the lower part of its base.

Lastly, the unit (1) also incorporates an incident detector device in the electronic controller (10) allowing incidents to be resolved remotely from the center, as well as a visual recognition scanning system, by way of the video camera (14) so that the unit, by means of corresponding software installed in the computer (6), is automatically directed towards the area where it detects groups of people in order to have a greater visual impact.

As the nature of the present invention and the manner in which to put it into practice has been described sufficiently, a more extensive explanation is not considered necessary for a person skilled in the art to understand its scope and the advantages derived therefrom, evidencing that, in its essence, it may be put into practice in other forms of embodiment which differ in their detail from that indicated in the title of the example and to which the claimed protection is also extended, provided the fundamental principle is not altered, changed or modified.

## Claims

1. Interactive and multifunctional information unit having autonomous movement of the type formed from a housing equipped with means which provide it with autonomous movement, allowing it to move to attract attention and, if for any reason it is necessary, to move to a determined point, having rolling means, actuation means formed by motors and means for storing the required energy, having reproduction systems, such as videos and/or a computer, means of visualization configured as monitors or touch screens and static printed elements of an informative or promotional character, **characterized in that** the housing (2) which is moved on wheels (3) that are driven by gear motors (4) powered by rechargeable batteries (5) and actuated by an electronic controller (10) ; **in that**, housed in its interior, it has at least one computer (6) capable of at least reproducing video images and sounds and is equipped with a connection module to the internet (7), via Wi-Fi or 3G mobile telephony; and **in that**, the operational control of said movement of the unit is carried out by radio control, via a remote control or by means of an autonomous system with a programmed route, by incorporating corresponding software in the computer (6) which is integrated into the housing (2) and/or by distance and/or long-distance control via the Internet.

2. Interactive and multifunctional information unit having autonomous movement according to Claim 1, **characterized in that** it has four wheels (3) and they are fixed to its lower base (2a), two of which are motorized by means of the respective gear motors (4) coupled thereto, there being respective chain (11) and pinion (12) mechanisms connecting them to the other two wheels.

3. Interactive and multifunctional information unit having autonomous movement according to Claim 1 and 2, **characterized in that** if the operational control is carried out by means of an autonomous system with a programmed route, volumetric and distance sensors (13) are incorporated in the housing.

4. Interactive and multifunctional information unit having autonomous movement according to Claim 1 and 2, **characterized in that** if the operational control is carried out by means of distance or long-distance control via the Internet, a video camera (14) is incorporated which allows images of the area to be obtained from the remote control point.

5. Interactive and multifunctional information unit having autonomous movement according to a plurality of or all of Claims 1 to 4, **characterized in that** it has a plug (15) for its connection to the electrical supply grid and for recharging the batteries (5) at the recharging station situated for this purpose in the area of the site in which the unit (1) moves.

6. Interactive and multifunctional information unit having autonomous movement according to Claim 5, **characterized in that** in a complementary or alternative manner to the plug (15), the incorporation of solar panel (16), expediently provided on the upper part of the housing (2), is envisaged, these being connected to the batteries (5) and providing the energy supply required for recharging said batteries (5).

7. Interactive and multifunctional information unit having autonomous movement according to a plurality of or all of Claims 1 to 6, **characterized in that** it has one or a plurality of LED technology panels (17), with static, blinking or changing info-promotional messages; and/or a projector device (18) suitable for projecting images, videos or messages on walls, roofs or floors of the site in which the unit moves; and/or one or a plurality of housings (19) to contain brochures or similar elements accessible to the public; and/or one or a plurality of mechanisms (20) that dispense products, samples or other objects.

8. Interactive and multifunctional information unit having autonomous movement according to a plurality of or all of Claims 1 to 7, **characterized in that** it has an interphone (21) which is connected to an information center; and/or a defibrillator (22) and a first-aid kit (23), housed in a suitable compartment; and/or a suction device (24) situated in the lower part of its base.
